# EUROPEAN PATENT APPLICATION

(11) **EP 1 870 379 A1**
(43) Date of publication of application: **26.12.2007**
(21) Application number: 06425434.5
(22) Date of filing: 23.06.2006
(51) Int. Cl.: C02F 1/32

(54) **Water purification system by means of a photocatalytic process**

(71) Applicant: Global Engineering and Trade S.p.A., 20123 Milano (IT)
(72) Inventor: Terruzzi, Claudio, Dr., 20123 Milano (IT)
(74) Representative: Lunati, Vittoriano

(57) **Abstract**

A water purification system by means of a photocatalytic process comprising: a tank (3) containing polluted water, a water purifying device (2) and a channelling system (4) to transport the polluted water from the tank (3) to the purification device (2), the purification device (2) also comprises: a container (20) containing said water and a plurality of photocatalytic elements (26), realized by a matrix (260) containing basic substances and including photocatalytic particles (261) and a plurality of ultraviolet lamps (24) suitable to illuminate the photocatalytic elements (26).

## Description

The present invention relates to a water purification system by means of a photocatalytic process, of the type specified in the preamble of claim 1.

The photocatalytic process which permits oxidation of pollutants is currently known.

Photocatalysis is based on the use of electrical charges, or electrons, provided by suitable semiconductors when they are energized by suitable electromagnetic waves.

A preferred semiconductor, for activation of the photocatalytic process, is Titanium Dioxide (TiO₂), preferably in the form of Anatase. It is energized by photons having a wavelength below 380 nm.

The electrons released by the Titanium Dioxide form a negative electric charge which bonds easily to other molecules present in the environment. In particular, it bonds to the molecules of oxygen (O₂) present in the atmosphere, forming negative ions (O₂⁻ or O⁻).

The ions O₂⁻ and O⁻ are very reactive and bond to the molecules of pollutants present in the environment, in particular to nitrogen oxides (NOₓ), which are principally nitrogen monoxide and dioxide (NO or NO₂), forming negative ions NO₃⁻ , or to carbon monoxide (CO) giving rise to a carbon dioxide molecule CO₂.

Not only nitrogen and carbon oxides are oxidized using the photocatalytic process, but also many other harmful substances such as: Ammonia, Benzene, Toluene, Ethyl-benzene, m-Xylene, Ozone, Sulphur Dioxide, Formaldehyde, Acetaldehyde, PMx, Methanol and Ethanol.

The photocatalytic process also causes noteworthy sterilization of the surrounding environment: bacterial activity is in fact reduced considerably.

Said process is advantageously also utilized to purify water and the like.

Polluted water subjected to photocatalysis can in fact, in theory, be purified from bacteria, pollutants and soiling substances, i.e. fundamentally from any compound which requires to be eliminated.

Together with the considerable advantages characterizing the photocatalytic process, there are noteworthy drawbacks linked to this process.

In fact, the negative ions (for instance NO₃⁻), which are formed during said process due to the pollutants combining with oxygen, are dangerous acids that must not be discharged into the environment and into water destined for common uses.

This drawback is particularly evident when Titanium Dioxide particles are added to tanks containing polluted water and opportunely illuminated. In the present case, in fact, the photocatalytic material has a very high active surface, but leads to the undesirable formation of harmful acids.

Moreover, some existing purifiers based on the photocatalytic process do not exert a sufficiently purifying action on the water, notwithstanding a considerable incident light intensity.

In this situation, the technical aim underlying the present invention is to design a water purification system using a photocatalytic process capable of substantially overcoming the aforesaid drawbacks.

Within said technical aim, an important object of the invention is to produce a water purification system capable of implementing a photocatalytic action which does not cause the formation of acids.

Another important object of the invention is to produce a purification system capable of purifying a sufficiently high flow rate of water in proportion to the dimension of the system and to the quantity of energy irradiated.

A further object of the invention is to produce a water purification system using a photocatalytic process which is simple and inexpensive.

The technical aim and the objects specified are achieved by a water purification system using a photocatalytic process as claimed in the annexed Claim 1.

Preferred embodiments are highlighted in the sub-claims.

Further features and advantages of the invention are better explained below in the detailed description of a preferred embodiment of the invention, with reference to the attached drawings, wherein:
**Figure 1** shows a diagram of the system according to the invention;
**Figure 2** shows a top view in the section II - II of the device that performs photocatalysis and purification of the water;
**Figure 3** highlights in detail an element on which photocatalysis takes place; and
**Figure 4** shows a second embodiment of the device that performs photocatalysis.

With reference to the aforesaid Figures, the water purification system using a photocatalytic process according to the invention is indicated as a whole with the numeral **1.**

It comprises a water purification device **2** which substantially performs photocatalysis and purification of the water, a tank **3** containing polluted water, and a channelling system **4** of said polluted water, to convey it from the tank 3 to the purification device 2.

The system 1 is also supplied by a polluted water source **5** and the water is collected from said system 1 through an outlet **6.**

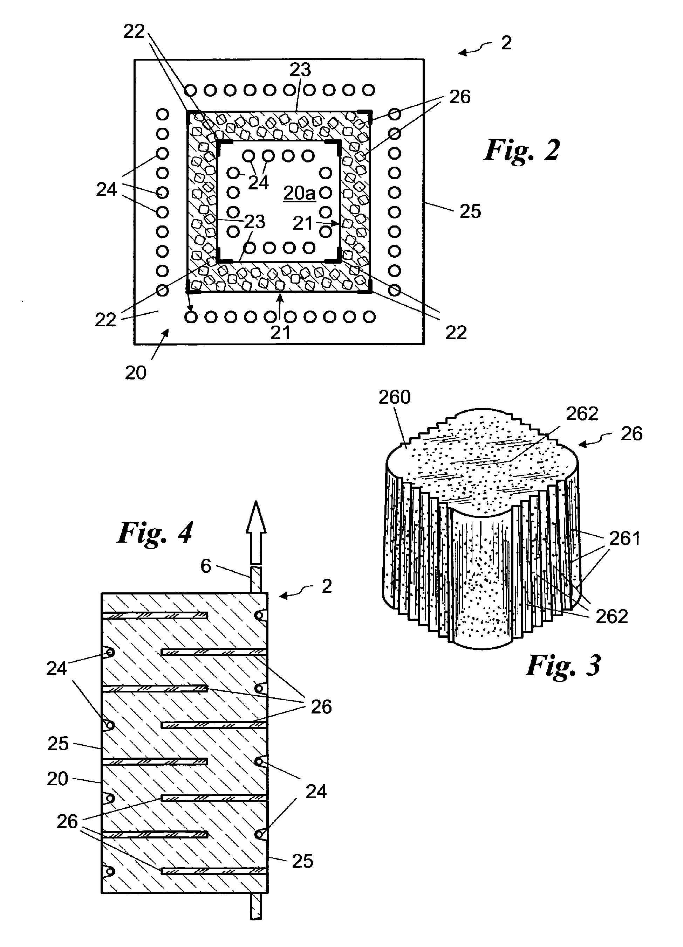

The purification device 2 purifies the water by means of the photocatalytic process and is shown in Figure 2. Said purification device 2 can be produced in different ways.

Hereunder two different examples of different types of purification devices are shown.

They both comprise a container **20** for the water being purified, photocatalytic elements **26** that perform the described photocatalytic reactions aided by suitable ultraviolet lamps **24.**

Said lamps **24** are preferably Wood's lamps, i.e., lamps that produce ultraviolet rays by means of a high-pressure mercury arc equipped with a barium silicate and mercury oxide filter, which allows selective emission of ultraviolet rays with a wavelength ranging from 320 to 400 nm.

The elements 26 are instead made of a material realized by a matrix **260** containing basic substances and including, at least on the surface, Titanium Dioxide particles **261.**

The matrix 260 can be composed of cementitious materials or rock material with a sponge-like structure, in particular igneous rocks such as, for instance, pumice having a density ranging from 0.1 to 0.3 g/cm³.

The percentage of titanium 261 covering the matrix 260 can vary within wide limits, in particular ranging from 1% to 5% in weight of the matrix 260.

The Titanium Dioxide 261 is preferably present in the form of Anatase or of another semiconductor that performs photocatalysis. The use of Titanium Dioxide in the form of Anatase combined with Wood's lamps is particularly advantageous. Said lamps in fact produce a lighting having the precise wavelength required to activate said photocatalysis. According to the known photoelectric effect, in fact, light with a higher wavelength would not be capable of activating photocatalysis, while light with a lower wavelength, with the same luminous intensity, would activate the same quantity of photocatalysis as the light utilized, however consuming a larger amount of energy.

### EXAMPLE 1

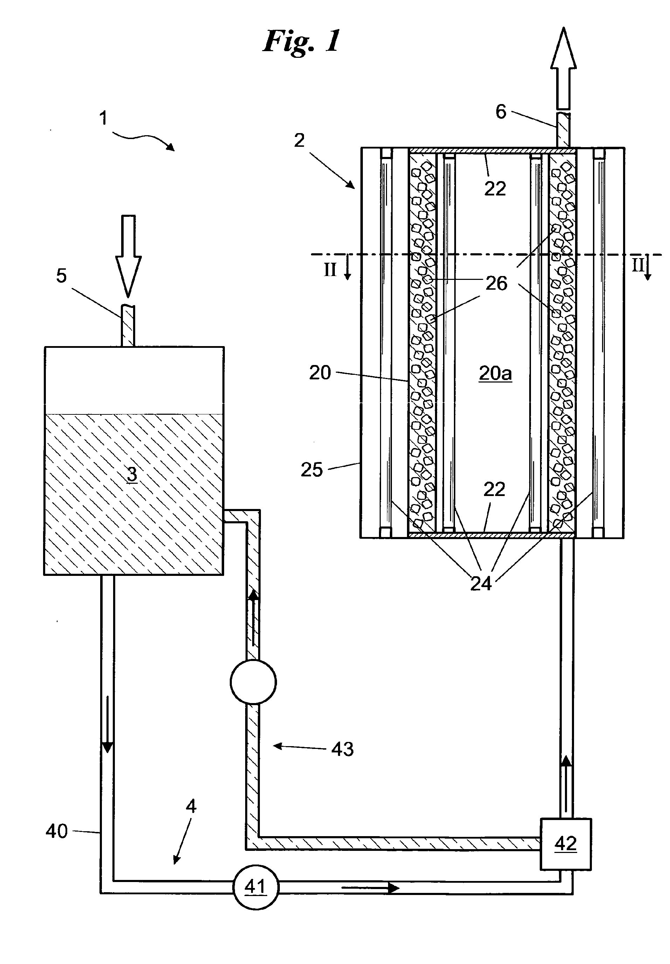

The purification device 2 is realized by a container 20, preferably hollow and defining a container for the water to be purified, as shown in Figures 1 and 2.

The container 20 is at least partly transparent to ultraviolet rays, for this purpose said container 20 is at least partially made of quartz or, alternatively, of special types of glass transparent to ultraviolet rays.

Said container 20 opportunely defines an inner volume realized by a solid containing a cavity 20a.

It is preferably made from the hollow space formed between two substantially coaxial cylindrical surfaces **21** with the same height and different base diameters, as shown in Figure 2. In this case the cavity 20a is produced by the inner volume of the cylindrical surface having the smaller diameter.

In the preferred embodiment, according to this example, the container 20 is produced by between two coaxial parallelepipeds 21 having a load-bearing structure **22,** made of stainless steel or another metal resistant to oxidation, which opportunely forms the bases and the corners of said container 20, and some large windows 23 made of material transparent to ultraviolet rays, said windows 23 substantially producing the side faces of the parallelepipeds 21.

Alternatively, the container 20 can be formed of two cylindrical elements made of a material transparent to ultraviolet rays.

The device 2 also comprises a plurality of ultraviolet lamps 24, preferably of the type indicated above and arranged outside the container 20 and in proximity to the windows 23 or the like.

Said lamps 24 are preferably placed both in the cavity 20a and in the space outside the container 20.

The device 2 also preferably comprises mirror walls 25, suitable to reflect towards the container 20 the ultraviolet rays directed towards the outside of the device 2. Said walls 25 can be positioned behind each lamp 24, or outside the device 2, so that the totality of light emitted by said lamps is directed towards the container 20.

Positioned inside the container 20 are photocatalytic elements 26, which perform the described photocatalytic reactions.

The elements 26 preferably have a maximum dimension of a few centimeters (1 cm - 5 cm) and a cubic or similar shape. Moreover, they preferably have an irregular surface and have grooves **262** or the like.

### EXAMPLE 2

The purifying device 2 is realized by a container 20, shown in Figure 4.

Positioned inside the container 20 are photocatalytic elements 26 realized by flat panels placed spaced apart and in staggered positions, so that they intercept the flow of water allowing it to pass through an outlet which is in alternating positions, as represented in the figure.

The ultraviolet lamps 24 are placed inside the container 20 and so that they illuminate the photocatalytic elements 26.

Said lamps are preferably positioned, as shown in Figure 4, at the level of the outlets produced for passage of the water.

Finally, the walls of the container 20 are preferably mirror walls to allow use of the energy of the ultraviolet rays directed towards the outside of the aquarium. As in the previous example, mirror walls 25 can be positioned behind each lamp 24.

The system 1 is also realized by the channelling system 4 of said polluted water. Said system 4 is common to both examples of embodiment.

Said system 4 comprises ducts **40** suitable to channel the polluted water from the tank 3 to the purification device 2.

The polluted water is moved by a pump **41.**

The channelling system 4 also comprises a flow measuring device **42,** of known type, suitable to detect any excesses in the flow rate of water directed towards the purification device 2. For this purpose, said flow measuring device 42 is preferably positioned in proximity to the device 2.

The flow measuring device 42 expels the excess water and sends it back to the tank 3, by means of a specific secondary duct **43,** to a different purification system, or to yet another destination.

The system 1 finally comprises a source 5 and the outlet 6. The former can be composed of a drain from any utility, while the latter can be connected to a water supply systems or similar for common uses.

Operation of a water purification system 1 by means of photocatalytic reactions, the structure of which is described above, is as follows.

The system 1 is supplied with polluted or soiled water from the source 5.

The water is then stored in the tank 3.

Subsequently, it is transported by the channelling system 4 to the purification device 2, by means of the pump 41 and the ducts 42.

The channelling system 4 precisely regulates the quantity of water that reaches the device 2 by means of the flow measuring device 42, which sends any excess water to the tank 3 by means of a secondary duct 43 or to other destinations.

The water then reaches the purification device 2 and is fed into the container 20, where the photocatalytic elements 26 are present.

The water is purified here by means of the photocatalytic reactions that develop on the surface of the elements 26.

The photocatalytic reactions are in fact activated by the photocatalytic elements 26 illuminated by the lamps 24.

Preferably, said reactions are activated by Titanium Oxide particles 261, illuminated by the Wood's lamps 24 or the like, which opportunely illuminate the container 20 from the inside and from the outside.

The negative ions (NO₃⁻ and others) which are formed by the photocatalytic process, and form the acids, bond easily to the positive calcium or sodium ions (Ca⁺⁺, Na⁺ and others) separated from the compounds (calcium carbonate, calcium sulphate...) present in the typically basic matrix 260.

This latter passage is of fundamental importance, as it enables to obtain, at the end of the photocatalytic process, harmless salts such as calcium nitrate Ca(NO₃)₂, sodium nitrate NaNO₃ and others, which precipitate in the environment, rather than acids.

This process leads to removal of the particles of matrix 260 from the elements 26. This erosion does not however decrease the efficacy of photocatalysis, as the elements 26 are made entirely of material 260 containing basic substances.

Once purified, the water can be extracted through the outlet 6 and discharged into water supply systems and the like.

The invention achieves important advantages.

In fact, the use of photocatalytic elements 26 having a basic matrix 260 containing scattered Titanium dioxide particles 261 enables to obtain a photocatalytic process that creates harmless salts at the end of the process, rather than acids.

Moreover, high percentages of reduction of bacterial load have been obtained using a pumice matrix 260 covered with Anatase particles 261. In fact, the effect of a photocatalytic element 26 with a pumice matrix 260 having a specific weight of approximately 0.2 g/cm³, a mass of approximately 15 g, and a side surface of approximately 125 cm² was measured. Said element was immersed in a solution containing 1000 g of water and 115 g of organic pollutants.

After 7 days of exposure to sunlight, a reduction in the bacterial load of 78.3% was obtained.

Moreover, said elements are very inexpensive, due to their small dimension and easily replaceable once consumed by long use.

The system itself is also very simple, precise and inexpensive, both in terms of production and use.

In fact, as mentioned previously, the use of Wood's lamps 24 and Titanium Dioxide in the form of Anatase allows optimization of the use of illuminating energy. Moreover, the illuminating energy is directed entirely at the container 20, in which photocatalysis takes place, by means of the mirror walls 25 or the like.

Moreover, an important advantage is given by the porous and irregular surface of the photocatalytic elements 26, typical of cementitious materials and even more so of pumice. Said surface in fact allows the particles of water and pollutants to be retained on the surface of the element 26 for the time required to activate the photocatalytic reaction.

The invention is susceptible to variants falling within the scope of the inventive concept.

In particular, the water can be sent several times to the purification device 2 for subsequent and increasingly accurate purification. Alternatively, several devices 2 can be positioned in series.

All parts are replaceable with equivalent elements and the materials, forms and dimensions can be any.

## Claims

1. Water purification system by means of a photocatalytic process comprising: a tank (3) containing polluted water, a water purifying device (2) comprising a container (20) containing said water and a plurality of photocatalytic elements (26), and a channelling system (4) to transport said polluted water from said tank (3) to said purification device (2),
**characterized in that**:
- said photocatalytic elements (26) are realized by a matrix (260) containing basic substances and including photocatalytic particles (261) at least on the surface,
- and **in that** it comprises a plurality of ultraviolet lamps (24) suitable to illuminate said photocatalytic elements (26).

2. Purification system according to claim 1, wherein said lamps (24) are realized by Wood's lamps and said photocatalytic particles (261) are Titanium Dioxide.

3. Purification system according to claim 1, wherein said container (20) is at least partly transparent to ultraviolet rays and wherein said plurality of lamps (24) are positioned outside said container (20).

4. Purification system according to claim 3, wherein said container (20) defines an inner volume realized by a solid containing at least one cavity (20a).

5. Purification system according to claim 4, wherein said container (20) is produced by the hollow space comprising two substantially coaxial cylindrical surfaces (21) and having different base diameters and in which said cavity (20a) is produced by the inner volume of said cylindrical surface (21) having said smaller base diameter.

6. Purification system according to claim 4, wherein said lamps (24) are positioned at least in said cavity (20a).

7. Purification system according to claim 6, wherein said lamps (24) are positioned in said cavity (20a) and in the space outside said container (20).

8. Purification system according to claim 1, wherein said photocatalytic elements (26) are substantially realized by cubes having maximum dimensions ranging from 1 cm to 5 cm.

9. Purification system as claimed in claim 1, wherein said plurality of lamps (24) are placed inside said container (20).

10. Purification system according to claim 9, wherein said photocatalytic elements (26) are substantially realized by flat panels placed spaced apart and in staggered positions.

11. Purification system according to claim 10, comprising mirror walls (25), suitable to reflect towards said container (20) the ultraviolet rays directed towards the outside of the device (2).

12. Purification system according to claim 1, wherein said channelling system (4) comprises a flow measuring device (42) suitable to measure and regulate the flow rate of said water.

13. Purification system according to claim 1, wherein said matrix (260) is made of cementitious material.

14. Purification system according to claim 1, wherein said matrix (260) is made of rock material with a sponge-like structure.

15. Purification system according to claim 14, wherein said matrix (260) is made of pumice.
